# EUROPÄISCHE PATENTSCHRIFT

(11) **EP 3 091 368 B1**
(45) Veröffentlichungstag und Bekanntmachung des Hinweises auf die Patenterteilung: **08.11.2017**
(21) Anmeldenummer: 16167588.9
(22) Anmeldetag: 29.04.2016
(51) Int. Cl.: G01S 7/41, G01S 13/72, G01S 13/89, G01S 13/93, G01S 13/86

(54) **VERFAHREN ZUM BETRIEB EINES RADARSENSORS IN EINEM KRAFTFAHRZEUG, RADARSENSOR UND KRAFTFAHRZEUG**
METHOD FOR OPERATION OF A RADAR SENSOR IN A MOTOR VEHICLE, RADAR SENSOR AND MOTOR VEHICLE
PROCEDE DE FONCTIONNEMENT D'UN CAPTEUR RADAR DANS UN VEHICULE AUTOMOBILE, CAPTEUR RADAR ET VEHICULE AUTOMOBILE

(30) Priorität: 08.05.2015 DE 102015005987
(43) Veröffentlichungstag der Anmeldung: 09.11.2016
(73) Patentinhaber: AUDI AG, 85045 Ingolstadt (DE)
(72) Erfinder: Khlifi, Rachid, 85748 Garching (DE)

(56) Entgegenhaltungen:
- DE-A1-102013 201 799

## Beschreibung

Die Erfindung betrifft ein Verfahren zum Betrieb eines zur Umfeldwahrnehmung genutzten Radarsensors für ein Kraftfahrzeug, einen Radarsensor und ein Kraftfahrzeug.

Die Verwendung von Radarsensoren in Kraftfahrzeugen ist im Stand der Technik bereits weitgehend bekannt. Radarsensoren werden heutzutage meist als Umfeldsensoren für einen mittleren und größeren Distanzbereich eingesetzt, um andere Verkehrsteilnehmer oder größere Objekte in Distanz, Winkel und Relativgeschwindigkeit bestimmen zu können. Derartige Radardaten können in Umfeldmodelle eingehen oder auch unmittelbar Fahrzeugsystemen zur Verfügung gestellt werden. Nutzen aus Radardaten ziehen im bekannten Stand der Technik beispielsweise Längsführungssysteme, wie ACC, oder auch Sicherheitssysteme.

Radarsensoren herkömmlicher Bauart weisen meist eine größere Ausdehnung auf und sind eher klobig, nachdem die Antennen sowie die unmittelbar an der Antenne benötigten Elektronikkomponenten, also das Radar-Frontend, in einem Gehäuse integriert sind. Hauptsächlich bilden die Elektronikkomponenten dabei den Radar-Transceiver, der eine Frequenzsteuerung (üblicherweise umfassend eine Phasenregelschleife - PLL), Mischeinrichtungen, einem Low Noise Amplifier (LNA) und dergleichen enthält, oft werden jedoch auch Steuermodule und digitale Signalverarbeitungskomponenten antennennah realisiert, beispielweise um bereits aufbereitete Sensordaten, beispielsweise Objektlisten, auf einen angeschlossenen Bus, beispielsweise einen CAN-Bus, geben zu können.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Wie erwähnt, werden die Radardaten von Radarsensoren meist für Fahrerassistenzsysteme genutzt. Moderne Fahrerassistenzsysteme zielen häufig auf teilautomatisierte bis vollautomatisierte Fahrzeugführungsfunktionen ab, wobei die Handhabung aller möglichen Verkehrssituationen beim automatisierten Fahren äußerst komplex ist. Beispielsweise sind Fahrerassistenzsysteme bekannt, die bei der automatisierten, gegebenenfalls autonomen, Fahrzeugführung eingreifen sollen, wenn eine kritische Verkehrssituation entsteht.

Umfeldsensoren im Allgemeinen und Radarsensoren, wie einleitend dargestellt, im Speziellen, erlauben aufgrund der möglichen Hochintegration sensorintern immer mehr Intelligenz, so dass auch vorgeschlagen wurde, Verkehrssituationen seitens der Umfeldsensoren selbst zu interpretieren, um rechtzeitig auf eine kritische Verkehrssituation reagieren zu können, beispielsweise durch einen Fahreingriff wie Bremsen, Ausweichen, Lenken und dergleichen, aber auch durch warnende und/oder parametrierende Aktionen.

Moderne Radarsensoren werden als Umfeldsensoren für anspruchsvolle Fahrerassistenzsystem-Funktionen eingesetzt, nachdem gerade bei der Erfassung von dynamischen und statischen Objekten bzw. allgemeinen Merkmalen im Umfeld des eigenen Kraftfahrzeugs die Radartechnologie die nötige Leistungsfähigkeit liefert. Gegebenenfalls sogar im Radarsensor selber wird abhängig von den erkannten Merkmalen im Umfeld eine Bewertung der Verkehrssituation durchgeführt, wobei bei Erfüllung eines Aktionskriteriums ein geeignete Aktion durchgeführt wird, beispielsweise eine Warnung ausgegeben wird und/oder ein Fahreingriff durchgeführt wird und/oder ein Fahrzeugsystem umparametriert wird.

Viele Fahrerassistenzsysteme sehen vor, dass durch Radarsensoren erfasste Merkmale und speziell Objekte, entsprechend vorausgewertet, zu Weiterverarbeitungseinheiten bzw. Auswertungsalgorithmen in einem Steuergerät des Kraftfahrzeugs übertragen werden, beispielsweise als Objektlisten. Um Falsch- oder Fehlaktionen in komplexeren Verkehrssituationen zu vermeiden, ist es bekannt, vor der Auswertung der Aktionskriterien eine Situationsanalyse (SITA) durchzuführen, bei der eine Vielzahl von Informationen herangezogen wird, um eine gute Bewertung an die die Aktionskriterien auswertenden Aktionsalgorithmen weiterzugeben.

Zukünftige Radarsensoren sollen nicht nur dynamische Objekte detektieren können, sondern auch statische Objekte, beispielsweise in Form von Konturen ("Fences"), erfassen können. Außerdem sollen weitere Merkmale des statischen Umfelds aus den Radardaten extrahiert werden, beispielsweise freie und belegte Bereiche im Umfeld des Kraftfahrzeugs.

Die radarbasierte Erfassung aller Details im Umfeld des Kraftfahrzeugs generiert einen hohen Aufwand in der Radar-Signalverarbeitung und benötigt eine sehr hohe Rechenleistung. Die Verfolgung von allen Reflektionen über längere Zeit erfordert einen hohen Speicherbedarf. Die Analyse und Interpretation aller Radardaten benötigt eine erhöhte Zykluszeit bzw. einen erhöhten Zeitaufwand, so dass das durch wenigstens einen Radarsensor gebildete Radarsystem insgesamt langsamer arbeitet. Gerade dann, wenn es um eine möglichst schnelle Reaktion von Fahrerassistenzsystemen bei kritischen Verkehrssituationen geht, ist jedoch der Wunsch nach einer schnelleren Umfelderfassung durch die Radarsensoren gegeben. Nach aktuellem Stand der Technik ist eine schnellere radarbasierte Umfelderfassung nur mit einer Reduzierung der zu bearbeitenden Radardaten bzw. durch Degradation der Erfassungsperformance denkbar, was jedoch unerwünscht ist.

DE 10 2013 201 799 A1 offenbart ein Fahrerassistenzsystem für ein Fahrzeug und ein Verfahren zum Erkennen einer bestimmten Position des Fahrzeugs. Dabei soll eine Fahrstrecke aufgezeichnet werden und durch Abgleichen der aufgezeichneten Fahrstrecke mit einer abgespeicherten Fahrstrecke ein Wiedererkennen einer bestimmten Position des Fahrzeugs erreicht werden, wobei bei Wiedererkennen der Position dem Fahrer eine zu befahrende Trajektorie angeboten wird.

Der Erfindung liegt daher die Aufgabe zugrunde, zumindest für bestimmte Situationen eine schnelle Umfelderfassung durch Radarsensoren bei dennoch hoher Erfassungsgenauigkeit zu erlauben.

Zur Lösung dieser Aufgabe ist bei einem Verfahren der eingangs genannten Art erfindungsgemäß vorgesehen, dass zu wenigstens einer durch das Kraftfahrzeug zurückgelegten Strecke durch den Radarsensor wahrnehmbare statische Merkmale beschreibende Referenzdaten unter Berücksichtigung von entlang der Strecke aufgenommenen Radardaten ermittelt und innerhalb des Radarsensors abgespeichert werden, wobei bei einem erneuten Befahren wenigstens eines Abschnitts einer Strecke, zu der Referenzdaten gespeichert wurden, die Auswertung aktuell aufgenommener Radardaten unter Berücksichtigung der Referenzdaten aufwandsreduziert durchgeführt wird.

Es wurde erkannt, dass Fahrer die gleiche Strecke oft häufiger benutzen, beispielsweise beim Weg zu oder von einem Arbeitsplatz. Für derartige Strecken bleibt das statische Umfeld gleich. Infrastrukturen, beispielsweise Randbebauungen, Leitplanken, Bäume, Brücken, Gebäude, teilweise Baustellen, die Umgebung im privaten Haus, die Garage, die Parkplätze und dergleichen bleiben gleich. Auch bezüglich des Fahrstils ist damit zu rechnen, dass wenig Veränderungen seitens des Fahrers auftreten.

Mithin wird letztlich vorgeschlagen, einen intelligenten Radarsensor mit einem Gedächtnis zu versehen, das bedeutet, die Radarsensoren werden für wiederholt befahrene Strecken angelernt. Durch die Referenzdaten bleiben bestimmte erkannte Umfeldmerkmale des statischen Umfeldes bekannt, so dass es möglich wird, die Radar-Erfassung auf das Relevante zu fokussieren und die Rechen- und Speicherperformance optimal zu nutzen. Auf diese Weise kann erreicht werden, dass die Radarsensoren zumindest bezüglich der Strecken, zu denen Referenzdaten vorliegen, leistungsfähiger werden und in bestimmten kritischen Situationen sehr schnell Gefahren erkennen und gegebenenfalls selbst Aktionen auslösen können, beispielsweise Bremseingriffe. Zumindest für wiederholt befahrene Strecken lässt sich dabei eine Steigerung der Reaktionszeit der Sensoren bzw. der radarbasierten Fahrerassistenzsysteme erreichen. Auch kann der Stromverbrauch von Radarsensoren optimiert werden.

Wird mithin festgestellt, dass eine bestimmte Strecke mehrfach gefahren wird, werden die entlang dieser Strecke aufgenommenen Radardaten genutzt, um die Referenzdaten abzuleiten, wobei es bei geeigneter Speicherkapazität auch denkbar ist, die Radardaten wenigstens teilweise unmittelbar als Referenzdaten zu verwenden. Idealerweise, worauf im Folgenden noch näher eingegangen werden wird, werden die Referenzdaten bei mehrmaligen Fahren der Strecke ständig verbessert. So wird letztlich eine Art Umfeldkarte entlang der Strecke aufgebaut und immer wieder mit mehr Details versorgt bzw. aktualisiert. Die Referenzdaten über das stationäre Umfeld werden dabei im Radarsensor selbst gespeichert, selbstverständlich der Strecke zugeordnet, wozu eine geeignete Speichereinrichtung genutzt werden kann. Dabei sei an dieser Stelle noch angemerkt, dass selbstverständlich Referenzdaten für mehrere unterschiedliche Strecken gespeichert werden können. Nutzen entfalten die Referenzdaten auch bereits dann, wenn nur ein Abschnitt einer Strecke, zu der Referenzdaten vorliegen, erneut gefahren wird.

Zur Ortszuordnung sind dabei verschiedene, grundsätzlich bekannte Varianten denkbar. So können beispielsweise in den Referenzdaten enthaltene Positionsangaben sich auf ein absolutes, insbesondere geodätisches Koordinatensystem beziehen, zusätzlich oder alternativ aber auch auf ein lokales, insbesondere kraftfahrzeugbezogenes Koordinatensystem. Eine Ortszuordnung im ersten Fall kann dann beispielsweise mittels bekannter Ortsbestimmungsmethoden erfolgen, beispielsweise durch eine Kombination der Nutzung eines globalen Navigationssatellitensystems wie GPS, eines Map-Matching und/oder einer Koppelnavigation. Die Nutzung von auf das Kraftfahrzeug bezogenen Koordinatensystemen ist insbesondere dann zweckmäßig, wenn nur mit geringen Abweichungen bezüglich der konkret genutzten Trajektorie gerechnet werden muss, wobei dann ein Registrierungsvorgang erfolgen kann, um in den Referenzdaten enthaltene Merkmale räumlich korrekt zuzuordnen. Ein derartiger Registrierungsvorgang kann aufwandsarm durchgeführt werden, nachdem eine starre Registrierung aufgrund des statischen Umfelds ausreichend ist.

Mit besonderem Vorteil können zur Aufwandsreduzierung aus den Referenzdaten bekannte Merkmale in den aktuellen Radardaten identifiziert werden und die das identifizierte Merkmal betreffenden aktuellen Radardaten nicht weiter und/oder vereinfacht ausgewertet werden und/oder es kann vorgesehen sein, dass wenigstens ein Teil der Auswertung auf nach einer Differenzbildung der Referenzdaten und der Radardaten verbleibende Merkmale reduziert wird. Die Referenzdaten beschreiben letztlich bereits bekannte Informationen über das Umfeld des Kraftfahrzeugs, die nicht erneut extrahiert werden müssen, so dass Auswertungsschritte der Radardaten für solche Informationen vermieden werden können, die ohnehin bereits, gegebenenfalls mit hinreichender Sicherheit, bekannt sind. Beispielsweise ist es möglich, einfach zu überprüfen, ob bestimmte in den Referenzdaten beschriebenen statischen Merkmale auch weiterhin vorhanden sind, so dass eine genaue Auswertung der Radardaten diesbezüglich dann nicht mehr erfolgen muss. Im Rahmen einer Differenzbildung werden letztlich alle Merkmale, die ohnehin schon aus den Referenzdaten bekannt sind und auch in den aktuellen Radardaten vorhanden sind, entfernt, so dass die Auswertung auf besonders relevante, insbesondere dynamische und/oder neu hinzugekommene statische Objekte konzentriert werden kann.

Die Referenzdaten können jedoch auch anderweitig zur Verbesserung der Auswertung der aktuellen Radardaten vorteilhaft eingesetzt werden. So sieht eine besonders bevorzugte Ausgestaltung der vorliegenden Erfindung vor, dass die Referenzdaten bei der Nachverfolgung von in den aktuellen Radardaten detektierten Objekten verwendet werden, insbesondere zur Plausibilitätsüberprüfung einer Hypothese und/oder zur verbesserten Abschätzung eines Hintergrundes und/oder in Abhängigkeit eines bekannten Verlaufs für statische Objekte. Es ist also möglich, Objekthypothesen für die Nachverfolgung ("Tracking") von den Merkmalen, insbesondere Objekten, zu verbessern. Zunächst ist bereits die Grundlage für die Nachverfolgungsalgorithmen optimiert, da die statischen Objekte, wenn diese nachverfolgt werden, bereits bekannt sind, insbesondere also auch ihr Verlauf in den aktuellen Radardaten besser vorhergesagt werden kann. Hypothesen können auch im Hinblick auf Plausibilitätsprüfungen verbessert werden, wenn beispielsweise aus den Referenzdaten bekannt ist, dass sich an einer bestimmten Stelle ein statisches Objekt befindet, das für dynamische Objekte nicht durchquerbar ist, beispielsweise ein Haus oder dergleichen. Auch kann vernünftig angenommen werden, dass aus einer Wand (ohne Tür) kein dynamisches Objekt herauskommen kann. Gerade für die Nachverfolgung dynamischer Objekte verbessert sich die Berechnung dadurch, dass der Hintergrund, also insbesondere die durch die Referenzdaten beschriebenen statischen Merkmale, besser bekannt ist. So lässt sich insgesamt auch die Auswertungsqualität verbessern.

Moderne Radarsensoren, insbesondere die eingangs erwähnten, auf Halbleitertechnologie basierenden Ausführungen, erlauben eine hochgenaue Abtastung der Umgebung, mithin auch über (dynamische) Objekte hinausgehende Analysen des Umfelds des Kraftfahrzeugs, so dass, wie im Folgenden noch näher erläutert werden wird, auch andere Merkmale der Umgebung extrahiert und im Rahmen der Referenzdaten genutzt werden können, insbesondere auf den Straßenverlauf bezogene Merkmale. Derartige auf den Straßenverlauf bezogene Merkmale ermöglichen es in bevorzugter Ausbildung, dass in Abhängigkeit der Referenzdaten ein Relevanzbereich für die Auswertung der Radardaten definiert wird, insbesondere aufgrund eines Ausschlusses von nicht befahrbaren und/oder räumlich abgetrennten befahrbaren, aus den Referenzdaten in ihrer Lage bekannten Umfeldbereichen. Befindet sich das Kraftfahrzeug beispielsweise auf einer Autobahn, bei der die Fahrbahnen für die entgegengesetzten Fahrtrichtungen deutlich getrennt sind, ist für das Kraftfahrzeug die aktuell befahrene Fahrtrichtung relevant, während der Radarsensor (bei entsprechender Ausrichtung) auch die dynamischen Objekte des Gegenverkehrs erfasst, deren Auswertung eine große Menge an Ressourcen benötigen würde, jedoch keine nutzbringenden Informationen liefert. Ist anhand der Referenzdaten bereits bekannt, wo sich die relevante Fahrbahn für das Kraftfahrzeug und mithin auch die relevanten Objekte im Umfeld des Kraftfahrzeugs befinden müssen, kann eine entsprechende Einschränkung der Auswertung der Radardaten auf derartige Umfeldbereiche erfolgen, wodurch auch eine hervorragende Optimierung der Nutzung der Rechen- und Speicherressourcen ermöglicht wird. Derartiges gilt beispielsweise auch dann, wenn eine Kreuzung vorausliegt und auf die jetzige Straße stoßende Straßen auch bereits erfasst werden können, wenn die auf anderen Straßen befindlichen Objekte noch keine Relevanz für das eigene Kraftfahrzeug entwickeln können. Dann können entsprechende Straßen- bzw. Straßenabschnitte aufgrund der Referenzdaten ebenso bereits von der Auswertung ausgeschlossen werden. Es sei angemerkt, dass ein Ausschluss auch eine vorläufige Priorisierung enthalten kann, mithin beispielsweise zunächst von der Auswertung in einer kritischen Verkehrssituation ausgeschlossene Radardaten zu einem späteren Zeitpunkt, also niedriger priorisiert, noch ausgewertet werden, wenn keine Zeitkritikalität mehr gegeben ist.

Eine zweckmäßige Ausgestaltung der Erfindung sieht vor, dass Referenzdaten zu einer Strecke dann abgespeichert werden, wenn diese häufiger als eine vorbestimmte Anzahl von Malen gefahren wurde. Beispielsweise kann die vorbestimmte Anzahl 2 bis 6, insbesondere 4, betragen. Wird in diesem Beispiel eine Strecke viermal gefahren, ist ein Abspeicherkriterium erfüllt und Referenzdaten werden insbesondere aus den Radardaten der aktuellen Fahrt entlang der Strecke abgeleitet. Mit einem derartigen Abspeicherkriterium lässt sich Speicherplatz einsparen, nachdem nur diejenigen Strecken gespeichert sind, die auch tatsächlich wiederholt verwendet werden.

Mit besonderem Vorteil ist vorgesehen, dass Referenzdaten durch statistische Auswertung aus während mehreren Fahrten entlang der Strecke aufgenommenen Radardaten ermittelt werden und/oder mit jeder neuen Fahrt entlang der Strecke statistisch aktualisiert werden. Die Referenzdaten basieren also bevorzugt auf während mehreren Fahrten aufgenommenen Radardaten, so dass die vorliegenden Reflektionen statistisch betrachtet werden können und somit genauere Referenzdaten entstehen, die nicht durch Fehlechos und/oder sonstige Fehlmessungen beeinflusst sind. Zudem können auch nur kurzzeitig vorhandene statische Merkmale im Umfeld der Betrachtung entzogen werden, beispielsweise geparkte Kraftfahrzeuge, die nur während einer der Fahrten vorhanden waren. Auch eine statistische Aktualisierung kann zweckmäßig sein, wenn bei neuen Fahrten Abweichungen des statischen Umfelds entlang der Strecke festgestellt werden, welche insbesondere durch die Abwesenheit oder des Hinzukommen eines Merkmals bei mehreren aktuellen Fahrten plausibilisiert werden. Somit werden die Referenzdaten auch ständig möglichst aktuell gehalten. Konkret kann beispielsweise eine Abweichungsbetrachtung hinsichtlich des statischen Umfelds durchgeführt werden ("Delta-Evaluierung"), um neu hinzukommende statische Merkmale und/oder entfernte statische Merkmale feststellen zu können, insbesondere außerhalb von kritischen Situationen. So können die Referenzdaten immer wieder mit zusätzlichen Details versorgt werden und/oder aktualisiert werden. Es sei an dieser Stelle noch angemerkt, dass insbesondere im Hinblick auf eine Aktualisierung diese selbstverständlich auch außerhalb des Fahrbetriebs stattfinden kann. Beispielsweise können die Radardaten einer Fahrt entlang der Strecke bzw. aus den Radardaten abgeleitete, den Referenzdaten entsprechende Vergleichsdaten abgespeichert werden, wobei die Aktualisierung der Referenzdaten dann außerhalb des Fahrbetriebs erfolgen kann, um die durch das Verwenden der Referenzdaten erhaltenen Vorteile hinsichtlich der gesteigerten Dynamik nicht zu gefährden.

In einer konkreten Ausgestaltung ist es beispielsweise möglich, zunächst in einer Anlernphase während einer weiteren vorbestimmten Anzahl von Fahrten jeweils Einzelfahrtradardaten und/oder aus den Einzelfahrtradardaten abgeleitete, den geplanten Referenzdaten entsprechende Basisdaten zu ermitteln und abzuspeichern. Ist die weitere vorbestimmte Anzahl von Fahrten in der Anlernphase erreicht, werden die Einzelfahrtradardaten und/oder die Basisdaten im Rahmen einer statistischen Analyse zusammengeführt, um erste Referenzdaten zu erhalten, die dann entsprechend abgespeichert werden können. Die weitere vorbestimmte Anzahl kann beispielsweise 5 betragen. Danach kann vorgesehen sein, während der Fahrten entlang der Strecke und/oder bevorzugt nach Abschluss der Fahrt und/oder in einer unkritischen Situation eine Aktualisierung und somit Verbesserung der Referenzdaten anhand aktueller Radardaten und/oder daraus abgeleiteter, der Referenzdaten entsprechender Vergleichsdaten entlang der Strecke durchzuführen.

Vorzugsweise werden die Referenzdaten also im Vergleich zu den Radardaten die Merkmale vereinfacht beschreibend gespeichert. So muss nicht jede einzelne Reflektion abgespeichert werden, sondern der Speicherplatz kann reduziert werden, wobei die Referenzdaten dennoch ausreichend sind, den Aufwand bei der Auswertung der aktuellen Radardaten deutlich zu reduzieren, indem beispielsweise geeignete, eine einfache Identifikation von Merkmalen in den aktuellen Radardaten erlaubende Kenngrößen der Merkmale abgespeichert werden. In diesem Zusammenhang ist es besonders zweckmäßig, wenn die Referenzdaten für jedes Merkmal eine Positionsangabe zu dem Merkmal und/oder wenigstens eine Ausdehnung des Merkmals und/oder wenigstens eine Reflektionseigenschaft des Merkmals umfassend gespeichert werden. Insbesondere ist es möglich, die Referenzdaten als eine Umfeldkarte zu speichern. Umfeldkarten sind im Stand der Technik bereits bekannt und beschreiben letztlich ebenso Objekte und sonstige Merkmale im Umfeld des Kraftfahrzeugs. Als Referenzdaten kann mithin eine Umfeldkarte entlang einer wiederholt befahrenen Strecke erzeugt und abgespeichert werden. Dabei können entsprechende, für Umfeldkarten geeignete und grundsätzlich bekannte Datenstrukturen eingesetzt werden.

Den Merkmalen, die in den Referenzdaten enthalten sind, können auch Zusatzdaten zugeordnet sein, beispielsweise eine Klassifikation des Merkmals. Derartige Zusatzdaten können insbesondere in weitergehenden Anwendungen der Referenzdaten vorteilhaft genutzt werden, worauf im Folgenden noch näher eingegangen werden wird, jedoch auch im Rahmen des erfindungsgemäßen Vorgehens, wenn beispielsweise einfach zu erhaltende Klassifizierungen zur Identifikation von Merkmalen verwendet werden sollen. Bevorzugt ist es ferner, wenn die Auswahl von in den Referenzdaten abzuspeichernden Merkmalen in Abhängigkeit einer Klassifikation der Merkmale erfolgt. Beispielsweise ist es zweckmäßig, als Merkmale den Straßenverlauf beschreibende Merkmale und statische, weitgehend unveränderliche Objekte abzuspeichern, beispielsweise Bebauungsobjekte, Bordsteine und dergleichen. Wird hingegen ein statisches Merkmal als geparktes Kraftfahrzeug klassifiziert, kann vorgesehen sein, dieses nicht in den Referenzdaten festzuhalten, da der Parkaufenthalt jederzeit beendet werden kann.

Wie bereits angedeutet wurde, werden zweckmäßigerweise als Merkmale in den Referenzdaten Bebauungsobjekte, insbesondere Gebäude und/oder Bordsteine und/oder Leitplanken und/oder Brücken, und/oder auf den Straßenverlauf bezogene Merkmale, insbesondere Kurven und/oder Kreuzungen und/oder Einmündungen, erfasst. Moderne Radarsensoren, insbesondere Radarsensoren, die auf Halbleitertechnologie basieren, insbesondere auf CMOS-Technologie, erlauben ein hochgenaues Abtasten auch der statischen Umgebung des Kraftfahrzeugs, was es insbesondere ermöglicht, andere Merkmale als Objekte zu detektieren, insbesondere auch auf den Straßenverlauf bezogene Merkmale wie das Vorliegen und die Position von Kreuzungen und dergleichen. Derartige Merkmale kennzeichnen die wiederholt befahrene Strecke und bleiben üblicherweise diese kennzeichnend erhalten, so dass sie zweckmäßig durch die Referenzdaten beschrieben abgespeichert und für weitere Fahrten entlang der Strecke vorgehalten werden.

In den Referenzdaten können zweckmäßig auch Zusatzinformationen enthalten sein, die sich nicht konkret auf Merkmale beziehen müssen. So kann vorgesehen sein, dass in den Referenzdaten auch eine insbesondere fahrerspezifische Trajektorie entlang der Strecke und/oder eine die Qualität der Datenerfassung, insbesondere das Rauschen, beschreibende Qualitätsinformation abgespeichert werden. Üblicherweise fahren Fahrer Strecken in einem bestimmten Stil ab, so dass sich vergleichbare Trajektorien ergeben, aus denen beispielsweise als mittlere Trajektorie eine fahrerspezifische Trajektorie abgeleitet werden kann, deren Bekanntsein insbesondere dann zweckmäßig ist, wenn durch die Referenzdaten auch Hypothesen bei der Nachverfolgung von Objekten oder die Nachverfolgung der Objekte insgesamt verbessert werden soll. Ferner sind derartige fahrerspezifische Trajektorien für die erfassten und gespeicherten Strecken auch für weitere Anwendungen der Referenzdaten nützlich, worauf im Folgenden noch näher eingegangen werden wird. Auch die Qualität der Datenerfassung kann eine nützliche Information sein, sowohl was die Verbesserung der Auswertung (im Hinblick auf die Verlässlichkeit der aktuellen Radardaten) angeht, als auch hinsichtlich des Ziehens von Schlussfolgerungen bezüglich der aktuellen Umstände der Datenaufnahme mit dem Radarsensor. So ist es beispielsweise möglich, dass, beispielsweise bei einem vorliegenden erhöhten Rauschen, erkannt wird, dass Regen oder andere Wetterbeeinträchtigungen vorliegen.

Eine vorteilhafte Weiterbildung der Erfindung sieht vor, dass die Referenzdaten, zumindest bezogen auf einen aktuellen, gemeinsam befahrenen Streckenabschnitt, über Kraftfahrzeug-zu-Kraftfahrzeug-Kommunikation wenigstens einem weiteren, insbesondere ebenso einen Radarsensor aufweisenden Kraftfahrzeug zur Verfügung gestellt werden. Auf diese Weise können die Referenzdaten zweckmäßig auch in anderen Kraftfahrzeugen genutzt werden, die zumindest einen aktuellen Streckenabschnitt gemeinsam mit dem Kraftfahrzeug, in dem der betrachtete Radarsensor verbaut ist, befahren. Ausgestaltungen der Erfindung sehen auch vor, dass, insbesondere bei durch ein Navigationssystem geführten Kraftfahrzeugen, anhand eines vorangehenden Datenaustausch festgestellt wird, wie weit der gemeinsame Streckenabschnitt der Strecke reicht, so dass für das andere Kraftfahrzeug zweckmäßige Referenzdaten genau bestimmt werden können. Die von dem anderen Kraftfahrzeug empfangenen Referenzdaten können dort in einem baugleichen Radarsensor auch zur Verbesserung, insbesondere Beschleunigung, der Auswertung genutzt werden, insbesondere dann, wenn die entsprechende Strecke bzw. der Streckenabschnitt noch nicht abgespeichert sind. Möglich ist es aber selbstverständlich auch, die Referenzdaten als eine Art Ersatz für einen im empfangenden Kraftfahrzeug nicht vorhandenen Radarsensor zu nutzen, so dass dem anderen Kraftfahrzeug zusätzliche Informationen zu seiner Umgebung zur Verfügung gestellt werden.

In einer vorteilhaften Weiterbildung ist vorgesehen, dass bei Austausch des Radarsensors eine in einer weiteren Komponente des Kraftfahrzeugs gespeicherte Kopie der Referenzdaten in den neu eingebauten Radarsensor übertragen wird und/oder der neu eingebaute Radarsensor durch Referenzdaten von einen räumlich und/oder zeitlich überlappenden Erfassungsbereich aufweisenden weiteren Radarsensoren des Kraftfahrzeugs angelernt wird. Soll der Radarsensor ausgetauscht werden, ist ein vorteilhaftes, schnelles Anlernen des neu eingesetzten Radarsensors besonders einfach möglich, wenn eine Kopie der Referenzdaten (selbstverständlich inklusive die Strecken beschreibender Streckeninformationen) in einer weiteren Komponente des Kraftfahrzeugs vorgehalten wird, so dass die Referenzdaten dem neu eingebauten Radarsensor unmittelbar zur Verfügung gestellt werden können, wo sie auch gleich einsetzbar sind. Vorteilhaft ist es jedoch auch, wenn das Kraftfahrzeug ohnehin mehrere Radarsensoren aufweist, wenn die anderen Radarsensoren zum Anlernen des neu eingebauten Radarsensors beitragen. Denn häufig weisen mehrere Radarsensoren des Kraftfahrzeugs räumlich und/oder zeitliche überlappende Erfassungsbereich auf, so dass Referenzdaten anderer Radarsensoren des Kraftfahrzeugs auch für den neu eingebauten Radarsensor nützlich sind, um die eigene Basis von Referenzdaten aufzubauen bzw. zu rekonstruieren. Radarsensoren im Kraftfahrzeug können sich also gegenseitig anlernen, was jedoch nicht auf den Austausch eines Radarsensors beschränkt sein muss.

So sieht eine weitere, besonders bevorzugte Ausgestaltung der Erfindung vor, dass die Ermittlung und/oder Aktualisierung der Referenzdaten auch unter Berücksichtigung der Radardaten und/oder Referenzdaten weiterer, einen räumlich und/oder zeitlich überlappenden Überwachungsbereich zu dem Radarsensor aufweisender Radarsensoren des Kraftfahrzeugs erfolgt. Mithin ergänzen sich die Radarsensoren gegenseitig, um besonders hochwertige Referenzdaten zu erhalten, wobei mit besonderem Vorteil Radardaten und/oder Referenzdaten unterschiedlicher Radarsensoren durch statistische Analyse zusammengefasst werden können. Dabei wird mithin das zeitliche und/oder räumliche Überlappen von Erfassungsbereichen besonders vorteilhaft ausgenutzt, um die Auswertung von Radardaten weiter zu verbessern.

Es ist weiterhin zweckmäßig, wenn die Referenzdaten und/oder die die Strecken beschreibenden Streckendaten in wenigstens einem Fahrerassistenzsystem des Kraftfahrzeugs berücksichtigt werden, insbesondere zur Ermittlung eines Fahrstils und/oder zur Identifikation von dem Fahrer unbekannten Strecken. Insbesondere dann, wenn auch fahrerspezifische Trajektorien abgespeichert werden, ist es möglich, aus den Referenzdaten auch eine Aussage über den Fahrstil des Fahrers zu ermitteln, so dass auch beispielsweise Fahrprofile erstellt werden können. Weiteren Nutzen haben die Referenzdaten, insbesondere hinsichtlich der Identifikation von dem Fahrer wohlbekannten Strecken, auch bei der Aufmerksamkeits- und Müdigkeitserkennung. Denn es ist bekannt, dass Fahrer bei Strecken, die sehr häufig von ihnen gefahren werden (wobei die Häufigkeit eines Befahrens einer Strecke selbstverständlich auch in den Referenzdaten als Zusatzinformation abgespeichert werden kann), eine gewisse Routine entwickeln. Bei neuen Strecken jedoch kann die Aufmerksamkeit des Fahrers dann entsprechend gesteigert werden, insbesondere, indem Warnschwellwerte entsprechend angepasst werden.

Dabei sei an dieser Stelle noch angemerkt, dass das Wissen, ob zu einer Strecke Referenzdaten vorliegen, selbstverständlich auch innerhalb des Radarsensors genutzt werden kann, nachdem beispielsweise eine Umparametrierung für Strecken bzw. Streckenabschnitte erfolgen kann, die nicht in den Referenzdaten enthalten sind. So kann beispielsweise bei solchen unbekannten Streckenabschnitten die Detektionsdynamik erhöht werden. Auch bei Streckenabschnitten, zu denen Referenzdaten vorliegen, ist selbstverständlich eine Umparametrierung des Radarsensors möglich, beispielsweise dann, wenn sich aus einem Vergleich der Referenzdaten mit den aktuellen Radardaten ergibt, dass eine bislang nicht erfasste, neue, besonders kritische Verkehrssituation vorliegt, so dass auch in solchen Situationen, in denen ein Abweichungskriterium zwischen den Referenzdaten und den aktuellen Radardaten erfüllt ist, wenigstens ein Betriebsparameter des Radarsensors angepasst werden kann, insbesondere die Detektionsdynamik des Radarsensors erhöht werden kann.

Neben dem Verfahren betrifft die Erfindung auch einen Radarsensor zur Umfeldwahrnehmung in einem Kraftfahrzeug, der eine Speichereinrichtung zum Speichern von auf wenigstens eine durch das Kraftfahrzeug zurückgelegte Strecke bezogenen, durch den Radarsensor wahrnehmbare statische Merkmale beschreibenden Referenzdaten und eine zur Berücksichtigung der Referenzdaten zur Aufwandsreduzierung bei der Auswertung von aktuell aufgenommenen Radardaten bei einem erneuten Befahren wenigstens eines Abschnitts einer Strecke, zu der Referenzdaten gespeichert sind, ausgebildete Steuereinrichtung aufweist. Sämtliche Ausführungen bezüglich des erfindungsgemäßen Verfahrens lassen sich analog auf den erfindungsgemäßen Radarsensor übertragen, mit welchem mithin auch die genannten Vorteile erhalten werden können. Insbesondere ist die Steuereinrichtung des Radarsensors zur Durchführung des erfindungsgemäßen Verfahrens ausgebildet.

Schließlich betrifft die Erfindung auch ein Kraftfahrzeug, aufweisend wenigstens einen Radarsensor der erfindungsgemäßen Art. Dabei kann selbstverständlich vorgesehen sein, dass Teile des erfindungsgemäßen Verfahrens auch extern zu dem wenigstens einen Radarsensor durchgeführt werden, beispielsweise was die Übertragung zu anderen Kraftfahrzeugen angeht. Auch für das Kraftfahrzeug gelten die Ausführungen zum Verfahren und zum Radarsensor fort.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: einen Ablaufplan eines Ausführungsbeispiels des erfindungsgemäßen Verfahrens,
- Fig. 2: aufgenommene Radardaten entlang eines Streckenabschnitts,
- Fig. 3: einen erfindungsgemäßen Radarsensor, und
- Fig. 4: ein erfindungsgemäßes Kraftfahrzeug.

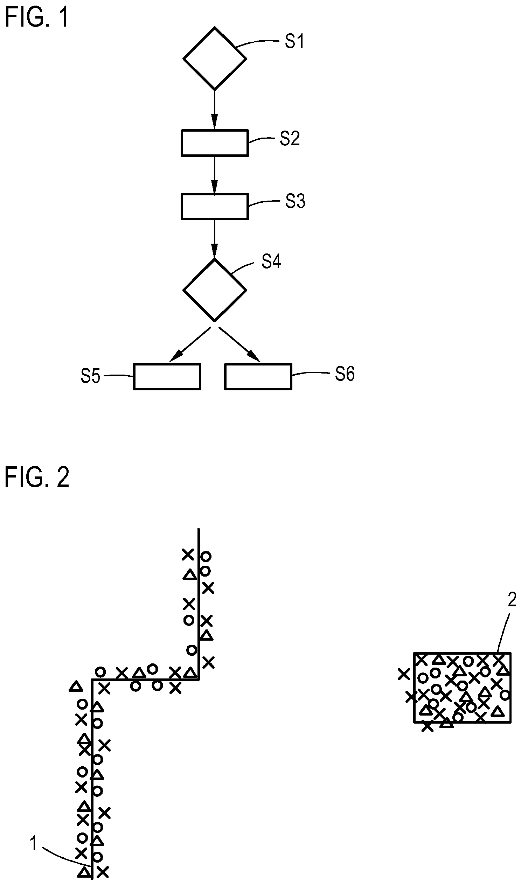

Fig. 1 zeigt einen Ablaufplan eines Ausführungsbeispiels des erfindungsgemäßen Verfahrens, wie es idealerweise durch eine Steuereinrichtung eines Radarsensors, der in einem Kraftfahrzeug verbaut ist und der Umfeldwahrnehmung dient, durchgeführt wird. Dabei wirkt die Steuereinrichtung des Radarsensors selbstverständlich mit anderen Fahrzeugsystemen des Kraftfahrzeugs zusammen, beispielsweise einem Navigationssystem, welches von dem Kraftfahrzeug befahrene Strecken identifiziert und nachverfolgt.

Dabei wird in einem Schritt S1 überprüft, ob eine Strecke ein Abspeicherkriterium erfüllt, vorliegend, ob die Strecke mehr als viermal durch das Kraftfahrzeug befahren wurde. Ist dies der Fall, beginnt in Schritt S2 eine Anlernphase für diese Strecke. Dabei werden während mehrerer Fahrten entlang der Strecke jeweils Einzelfahrtradardaten und Basisdaten aufgenommen und abgespeichert, wobei die Basisdaten in ihrer Struktur später zu ermittelnden Referenzdaten für die Strecke entsprechen. Beispielsweise können die Einzelfahrtradardaten und die Basisdaten während fünf verschiedenen Fahrten des Kraftfahrzeugs entlang der Strecke aufgenommen werden.

In einem Schritt S3 werden dann die Referenzdaten aus den Einzelfahrtradardaten und den Basisdaten durch statistische Analyse bestimmt. Die Referenzdaten sollen das statische Umfeld des Kraftfahrzeugs entlang der Strecke nach Art einer Umfeldkarte für durch den Radarsensor erfassbare Merkmale beschreiben. Die Referenzdaten sollen es mithin ermöglichen, auf möglichst einfache Art und Weise bei weiteren Fahrten in aktuellen Radardaten detektierte Merkmale zu identifizieren, ohne dass dann eine vollständige Auswertung der aktuellen Radardaten erfolgen muss. Hierfür ist in diesem Ausführungsbeispiel konkret vorgesehen, dass die Referenzdaten für jedes Merkmal eine Positionsangabe zu dem Merkmal, die Ausdehnungen des Merkmals und gegebenenfalls wenigstens eine Reflektionseigenschaft des Merkmals umfassen. Zusätzlich können den Merkmalen Zusatzdaten, beispielsweise eine Klassifikation des Merkmals, zugeordnet werden.

Wie bereits erwähnt, soll die in Form der Referenzdaten entstehende Umfeldkarte das statische Umfeld entlang der Strecke beschreiben. In den Referenzdaten zu speichernde Merkmale werden dabei anhand ihrer Klassifizierung, die durch Auswertung der Einzelfahrtradardaten ermittelt wurde, ausgewählt; vorliegend sollen als Merkmale in den Referenzdaten Bebauungsobjekte (umfassend Gebäude, Bordsteine, Leitplanken, Brücken, Randbebauung und dergleichen), aber auch auf den Straßenverlauf bezogene Merkmale beschrieben werden. Letztere zeigen beispielsweise an, wo sich Kurven, Kreuzungen, Einmündungen und dergleichen befinden.

Die Referenzdaten enthalten vorliegend auch nicht auf spezielle Merkmale bezogene Zusatzinformationen. Dabei handelt es sich zum einen um eine fahrerspezifische Trajektorie, entlang der die Strecke durchfahren wurde. Diese kann beispielsweise durch Mittelung der jeweils konkret verwendeten Trajektorien bestimmt werden. Als weitere Zusatzinformation enthalten die Referenzdaten eine die Qualität der Datenerfassung beschreibende Qualitätsinformation, wobei vorliegend das vorhandene Rauschen beschreibende Größen als Qualitätsinformation vorgehalten werden. Selbstverständlich umfassen Referenzdaten grundsätzlich eine Streckeninformation, die beschreibt, auf welche Strecke sich die Referenzdaten beziehen.

Die im Schritt S3 ermittelten Referenzdaten werden in einer Speichereinrichtung des Radarsensors abgespeichert.

In einem Schritt S4 wird zu einem späteren Zeitpunkt überprüft, ob die Strecke nochmals befahren wird. Falls dies zutrifft, werden während der Fahrt entlang der Strecke im Schritt S5 die Referenzdaten genutzt, um die Auswertung der aktuell aufgenommenen Radardaten zu verbessern, insbesondere dahingehend, dass durch Reduzierung des Auswertungsaufwands eine dynamischere, schnellere Umgebungserfassung erfolgt.

Hierzu werden zunächst aus den Referenzdaten bekannte Merkmale identifiziert, die durch die Referenzdaten bereits hinreichend genau beschrieben und weiterhin vorhanden sind, so dass eine genauere Auswertung der entsprechenden Radardaten unterbleiben kann. Dabei ist insbesondere eine Differenzbildung denkbar, bei der nur noch die verbleibenden Merkmale tatsächlich ausgewertet werden müssen. Diese Analyse kann bereits vorangehend auf einen aktuellen Relevanzbereich reduziert werden, der ebenso in Abhängigkeit der Referenzdaten definiert werden kann. Insbesondere dadurch, dass auch den Straßenverlauf kennzeichnende Merkmale durch die Referenzdaten beschrieben werden, können mithin Bereiche identifiziert werden, die keinerlei Relevanz für die Beurteilung der Verkehrssituation des eigenen Kraftfahrzeugs haben. Beispielsweise kann davon ausgegangen werden, dass dann, wenn verschiedenen Fahrtrichtungen einer Autobahn zugeordnete Fahrbahnen baulich getrennt sind, Merkmale, die die andere Fahrtrichtung betreffen, nicht explizit ausgewertet werden müssen, oder zumindest mit äußerst geringer Priorität verfolgt werden können. Dasselbe gilt für andere, im Erfassungsbereich des Radarsensors befindliche Straßen, die erst zu einem nicht mehr relevanten Zeitpunkt in die von dem Kraftfahrzeug befahrene Straße einmünden und dergleichen. Auf diese Weise kann der notwendige Berechnungsaufwand anhand der Referenzdaten insgesamt deutlich reduziert werden.

Die Referenzdaten erlauben zur Verbesserung der Auswertung jedoch auch eine verbesserte Nachverfolgung von Objekten oder allgemeinen Merkmalen, nachdem zum einen Hypothesen hinsichtlich ihrer Plausibilität oder für statische Objekte hinsichtlich ihres aus den Referenzdaten zumindest abschätzbaren prädizierten Verlaufs verbessern lassen. Für dynamische Objekte ist aufgrund der Referenzdaten der Hintergrund deutlich besser bekannt, was ebenso zu einer verbesserten und insbesondere auch aufwandsreduzierten und schnelleren Nachverfolgung führt.

Wird eine zu starke Abweichung zwischen den aktuellen Radardaten und den Vergleichsdaten festgestellt, kann dies ein Anzeichen für eine kritische Verkehrssituation sein, zumindest aber für eine unbekannte Situation, so dass dies auch Auswirkungen auf die Parametrisierung des Radarsensors haben kann. Beispielsweise kann wenigstens ein Betriebsparameter des Radarsensors zur Erhöhung der Detektionsdynamik angepasst werden.

Die von der aktuellen Fahrt entlang der Strecke stammenden Radardaten bzw. aus diesen abgeleitete, den Referenzdaten entsprechende Vergleichsdaten werden zudem genutzt, um die Referenzdaten zu aktualisieren. Dies geschieht in einem Schritt S6 und muss nicht zwangsläufig zeitgleich mit dem Fahren entlang der Strecke und dem Schritt S5 erfolgen, wird jedoch in jedem Fall nur außerhalb von kritischen Verkehrssituationen durchgeführt.

Die Aktualisierung kann auch in Form einer statistischen Analyse erfolgen; bei nicht mehr detektierten, veränderten, und/oder neuen Merkmalen kann eine Plausibilisierung über mehrere Fahrten erforderlich sein.

Die Referenzdaten können auch anderweitig nutzbringend eingesetzt werden. So ist es beispielsweise denkbar, dass zumindest auf einen aktuellen, gemeinsam befahrenen Streckenabschnitt bezogene Referenzdaten über Kraftfahrzeug-zu-Kraftfahrzeug-Kommunikation wenigstens einem weiteren Kraftfahrzeug zur Verfügung gestellt werden, sei es zur Erweiterung von dessen Umfeldwahrnehmung oder als Referenzdaten für einen eigenen Radarsensor. Ferner können Referenzdaten auch in anderen Fahrzeugsystemen des Kraftfahrzeugs Berücksichtigung finden, beispielsweise in wenigstens einem Fahrerassistenzsystem des Kraftfahrzeugs. Schwellwerte einer Müdigkeitserkennung können beispielsweise angepasst werden, wenn festgestellt wird, dass eine aktuell befahrene Strecke unbekannt ist, mithin noch nicht wiederholt befahren wurde. Auch können, insbesondere falls die Referenzdaten auch eine Trajektorie enthalten, Schlussfolgerungen zum Fahrstil des Fahrers gezogen werden.

Kraftfahrzeuge weisen häufig mehrere Radarsensoren auf, deren Erfassungsbereiche räumlich und/oder zeitlich überlappen. Bei der ersten Ermittlung der Referenzdaten (Schritt S3) genau wie bei der Aktualisierung (Schritt S6) ist es dabei vorteilhaft, wenn auch Radardaten und/oder Referenzdaten anderer Radarsensoren des Kraftfahrzeugs berücksichtigt werden, wenn zeitlich und/oder räumlich überlappende Erfassungsbereiche vorhanden sind. Diese können ebenfalls im Rahmen einer statistischen Analyse eingehen. Die Radarsensoren lernen sich dabei mithin teilweise auch gegenseitig an.

Zweckmäßig sind derartige Betrachtungen auch, wenn ein Radarsensor ausgetauscht wird, so dass ein neu eingebauter Radarsensor durch andere Radarsensoren des Kraftfahrzeugs angelernt werden kann; es ist selbstverständlich auch möglich, eine Kopie der Referenzdaten für die Radarsensoren in einer anderen Komponente des Kraftfahrzeugs vorzuhalten und nach Austausch des Radarsensors in den neu eingebauten Radarsensor einzuladen.

Fig. 2 zeigt schematisch, wie durch statistische Analyse von Radardaten bei mehrfachem Befahren einer Strecke hochqualitative Referenzdaten erhalten werden können. Gezeigt ist eine beispielsweise einen Bordstein symbolisierende Kante 1 sowie ein Objekt 2. Die Kreuze, Kreise und Dreiecke stellen jeweils Reflektionsereignisse bei drei unterschiedlichen Fahrten entlang der Strecke dar. Durch statistische Kombination dieser Daten lassen sich die Kante 1 und das Objekt 2 hervorragend beschreiben.

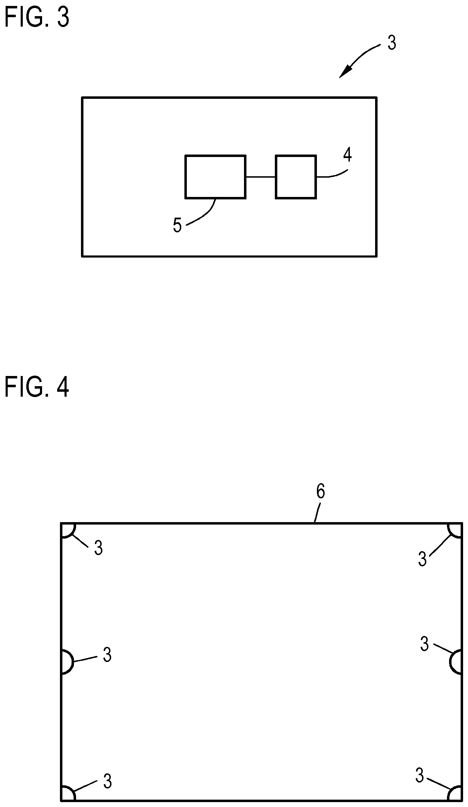

Fig. 3 zeigt eine Prinzipskizze eines erfindungsgemäßen Radarsensors 3, der neben seinen üblichen Komponenten eine Speichereinrichtung 4 für die Referenzdaten und eine Steuereinrichtung 5 aufweist, die diese wie beschrieben zur Verbesserung der Auswertung nutzen kann. Die Steuereinrichtung 5 kann zur Ermittlung der Referenzdaten ausgebildet sein. Der Radarsensor 3 ist bevorzugt in Halbleiter-Technologie realisiert, beispielsweise in CMOS-Technologie, wobei der Radar-Transceiver durch einen CMOS-Chip realisiert sein kann, der auch wenigstens teilweise die Steuereinrichtung und/oder eine digitale Datenverarbeitungskomponente realisieren kann. Der Halbleiter-Chip kann in einem Package mit einer Antennenanordnung des Radarsensors 3 realisiert werden, um eine äußerst kompakte, kleinbauende Bauform zu erreichen, die zudem ein hohes Signal-zu-Rausch-Verhältnis aufgrund der Nähe der einzelnen Komponente zueinander aufweist (kurze Signalwege).

Fig. 4 zeigt schließlich eine Prinzipskizze eines erfindungsgemäßen Kraftfahrzeugs 6, in welchem acht Radarsensoren 3 verbaut sind, die allesamt wie beschrieben in einer Speichereinrichtung 4 Referenzdaten vorhalten und diese zur Optimierung ihrer Ressourcen einsetzen. Mit den acht Radarsensoren 3 kann das komplette Umfeld des Kraftfahrzeugs 6 abgedeckt werden.

## Patentansprüche

1. Verfahren zum Betrieb eines zur Umfeldwahrnehmung genutzten Radarsensors (3) für ein Kraftfahrzeug (6), wobei zu wenigstens einer durch das Kraftfahrzeug (6) zurückgelegten Strecke durch den Radarsensor (3) wahrnehmbare statische Merkmale beschreibende Referenzdaten unter Berücksichtigung von entlang der Strecke aufgenommenen Radardaten ermittelt und innerhalb des Radarsensors (3) abgespeichert werden,
**dadurch gekennzeichnet,**
**dass** bei einem erneuten Befahren wenigstens eines Abschnitts einer Strecke, zu der Referenzdaten gespeichert wurden, die Auswertung aktuell aufgenommener Radardaten unter Berücksichtigung der Referenzdaten aufwandsreduziert durchgeführt wird.

2. Verfahren nach Anspruch 1,
**dadurch gekennzeichnet,**
**dass** zur Aufwandsreduzierung aus den Referenzdaten bekannte Merkmale in den aktuellen Radardaten identifiziert werden und die das identifizierte Merkmal betreffenden aktuellen Radardaten nicht weiter und/oder vereinfacht ausgewertet werden, und/oder dass wenigstens ein Teil der Auswertung auf nach einer Differenzbildung der Referenzdaten und der Radardaten verbleibende Merkmale reduziert wird.

3. Verfahren nach Anspruch 1 oder 2,
**dadurch gekennzeichnet,**
**dass** Referenzdaten zu einer Strecke dann abgespeichert werden, wenn diese häufiger als eine vorbestimmte Anzahl von Malen gefahren wurde.

4. Verfahren nach einem der vorangehenden Ansprüche,
**dadurch gekennzeichnet,**
**dass** die Referenzdaten durch statistische Auswertung aus während mehreren Fahrten entlang der Strecke aufgenommenen Radardaten ermittelt werden und/oder mit jeder neuen Fahrt entlang der Strecke statistisch aktualisiert werden.

5. Verfahren nach einem der vorangehenden Ansprüche,
**dadurch gekennzeichnet,**
**dass** die Referenzdaten als im Vergleich zu den Radardaten die Merkmale vereinfacht beschreibend gespeichert werden.

6. Verfahren nach Anspruch 5,
**dadurch gekennzeichnet,**
**dass** die Referenzdaten für jedes Merkmal eine Positionsangabe zu dem Merkmal und/oder wenigstens eine Ausdehnung des Merkmals und/oder wenigstens eine Reflektionseigenschaft des Merkmals umfassend gespeichert werden und/oder als eine Umfeldkarte gespeichert werden.

7. Verfahren nach einem der vorangehenden Ansprüche,
**dadurch gekennzeichnet,**
**dass** als Merkmale in den Referenzdaten Bebauungsobjekte, insbesondere Gebäude und/oder Bordsteine und/oder Leitplanken und/oder Brücken, und/oder auf den Straßenverlauf bezogene Merkmale, insbesondere Kurven und/oder Kreuzungen und/oder Einmündungen, erfasst werden.

8. Verfahren nach einem der vorangehenden Ansprüche,
**dadurch gekennzeichnet,**
**dass** in den Referenzdaten eine insbesondere fahrerspezifische Trajektorie entlang der Strecke und/oder eine die Qualität der Datenerfassung, insbesondere das Rauschen, beschreibende Qualitätsinformation abgespeichert wird.

9. Verfahren nach einem der vorangehenden Ansprüche,
**dadurch gekennzeichnet,**
**dass** die Referenzdaten bei der Nachverfolgung von in den aktuellen Radardaten detektierten Objekten (2) verwendet werden, insbesondere zur Plausibilitätsprüfung einer Hypothese und/oder zur verbesserten Abschätzung eines Hintergrundes und/oder in Abhängigkeit eines bekannten Verlaufs für statische Objekte (2).

10. Verfahren nach einem der vorangehenden Ansprüche,
**dadurch gekennzeichnet,**
**dass** in Abhängigkeit der Referenzdaten ein Relevanzbereich für die Auswertung der Radardaten definiert wird, insbesondere aufgrund eines Ausschlusses von nicht befahrbaren und/oder räumlich abgetrennten befahrbaren, aus den Referenzdaten in ihrer Lage bekannten Umfeldbereichen.

11. Verfahren nach einem der vorangehenden Ansprüche,
**dadurch gekennzeichnet,**
**dass** die Referenzdaten, zumindest bezogen auf einen aktuellen, gemeinsam befahrenen Streckenabschnitt, über Kraftfahrzeug-zu-Kraftfahrzeug-Kommunikation wenigstens einem weiteren, insbesondere ebenso einen Radarsensor aufweisenden Kraftfahrzeug zur Verfügung gestellt werden.

12. Verfahren nach einem der vorangehenden Ansprüche,
**dadurch gekennzeichnet,**
**dass** bei Austausch des Radarsensors (3) eine in einer weiteren Komponente des Kraftfahrzeugs (6) gespeicherte Kopie der Referenzdaten in den neu eingebauten Radarsensor (3) übertragen wird und/oder der neu eingebaute Radarsensor (3) durch Referenzdaten von einen räumlich und/oder zeitlich überlappenden Erfassungsbereich aufweisenden weiteren Radarsensoren (3) des Kraftfahrzeugs (6) angelernt wird.

13. Verfahren nach einem der vorangehenden Ansprüche,
**dadurch gekennzeichnet,**
**dass** die Ermittlung und/oder Aktualisierung der Referenzdaten auch unter Berücksichtigung der Radardaten und/oder Referenzdaten weiterer, einen räumlich und/oder zeitlich überlappenden Überwachungsbereich zu dem Radarsensor (3) aufweisender Radarsensoren (3) des Kraftfahrzeugs (6) erfolgt.

14. Verfahren nach Anspruch 13,
**dadurch gekennzeichnet,**
**dass** Radardaten und/oder Referenzdaten unterschiedlicher Radarsensoren (3) des Kraftfahrzeugs (6) durch statistische Analyse zusammengefasst werden.

15. Verfahren nach einem der vorangehenden Ansprüche,
**dadurch gekennzeichnet,**
**dass** die Referenzdaten und/oder die die Strecken beschreibenden Streckendaten in wenigstens einem Fahrerassistenzsystem des Kraftfahrzeugs (6) berücksichtigt werden, insbesondere zur Ermittlung eines Fahrstils und/oder zur Identifikation von dem Fahrer unbekannten Strecken.

16. Radarsensor (3) zur Umfeldwahrnehmung in einem Kraftfahrzeug (6), aufweisend eine Speichereinrichtung (4) zum Speichern von auf wenigstens eine durch das Kraftfahrzeug (6) zurückgelegte Strecke bezogenen, durch den Radarsensor (3) wahrnehmbare statische Merkmale beschreibenden Referenzdaten und **gekennzeichnet durch** eine zur Berücksichtigung der Referenzdaten zur Aufwandsreduzierung bei der Auswertung von aktuell aufgenommenen Radardaten bei einem erneuten Befahren wenigstens eines Abschnitts einer Strecke, zu der Referenzdaten gespeichert sind, ausgebildete Steuereinrichtung (5).

17. Radarsensor nach Anspruch 16,
**dadurch gekennzeichnet,**
**dass** die Steuereinrichtung (5) zur Durchführung eines Verfahrens nach einem der Ansprüche 1 bis 15 ausgebildet ist.

18. Kraftfahrzeug (6), aufweisend wenigstens einen Radarsensor (3) nach Anspruch 16 oder 17.

## Claims

1. Method for operating a radar sensor (3) for environment sensing for a motor vehicle (6), wherein reference data describing static features sensible by the radar sensor (3) in respect of at least one route covered by the motor vehicle (6), taking into account radar data recorded along the route, are determined and saved within the radar sensor (3), **characterised in that**, in the event of a repeat traverse of at least one section of a route in respect of which reference data were stored, the evaluation of currently recorded radar data, taking into account the reference data, is performed with reduced input.

2. Method according to claim 1, **characterised in that**, to reduce the input, features known from the reference data are identified in the current radar data and the current radar data relating to the identified feature are not evaluated further and/or are evaluated in a simplified manner, and/or that at least part of the evaluation is reduced to features remaining after the difference has been established between the reference data and the radar data.

3. Method according to claim 1 or 2, **characterised in that** reference data in respect of a route are saved, if this route has been driven more frequently than a predetermined number of times.

4. Method according to one of the preceding claims, **characterised in that** the reference data are determined through statistical evaluation from radar data recorded during multiple journeys along the route and/or are statistically updated with every new journey along the route.

5. Method according to one of the preceding claims, **characterised in that** the reference data are stored describing the features in more simplified form in comparison with the radar data.

6. Method according to claim 5, **characterised in that** the reference data for each feature are stored comprising an indication of position for the feature and/or at least an extent of the feature and/or at least a reflection property of the feature and/or are stored as a map of the surroundings.

7. Method according to one of the preceding claims, **characterised in that** constructional objects, more particularly buildings and/or kerbs and/or crash barriers and/or bridges, and/or features relating to the course of the road, more particularly bends and/or intersections and/or junctions, are collected as features in the reference data.

8. Method according to one of the preceding claims, **characterised in that** a more particularly driver-specific trajectory along the route and/or quality information describing the quality of the data collection, more particularly the noise, is saved in the reference data.

9. Method according to one of the preceding claims, **characterised in that** the reference data are used in the follow-up of objects (2) detected in the current radar data, more particularly to test the plausibility of a hypothesis and/or for improved estimation of a background and/or in dependence on a known course for static objects (2).

10. Method according to one of the preceding claims, **characterised in that**, in dependence on the reference data, a relevance range for the evaluation of the radar data is defined, more particularly on account of an exclusion of untraversable and/or spatially separate traversable surrounding areas, the location of which is known from the reference data.

11. Method according to one of the preceding claims, **characterised in that** the reference data, at least in relation to a current, jointly traversed route section, are made available by way of motor vehicle-to-motor vehicle communication to at least one further motor vehicle, more particularly one also having a radar sensor.

12. Method according to one of the preceding claims, **characterised in that**, in the event of replacement of the radar sensor (3), a copy of the reference data stored in a further component of the motor vehicle (6) is transferred into the newly installed radar sensor (3) and/or the newly installed radar sensor (3) is taught by means of reference data from further radar sensors (3) of the motor vehicle (6) that have a spatially and/or temporally overlapping detection range.

13. Method according to one of the preceding claims, **characterised in that** the determination and/or updating of the reference data is performed, also taking into account the radar data and/or reference data of further radar sensors (3) of the motor vehicle (6) that have a spatially and/or temporally overlapping detection range to the radar sensor (3).

14. Method according to claim 13, **characterised in that** radar data and/or reference data of different radar sensors (3) of the motor vehicle (6) are summarised by means of statistical analysis.

15. Method according to one of the preceding claims, **characterised in that** the reference data and/or the route data describing the routes are taken into account in at least one driver assistance system of the motor vehicle (6), more particularly to determine a driving style and/or to identify routes unknown to the driver.

16. Radar sensor (3) for environment sensing in a motor vehicle (6), having a storage facility (4) for storing reference data describing static features sensible by the radar sensor (3) in respect of at least one route covered by the motor vehicle (6) and **characterised by** a control device (5) configured to take into account the reference data to reduce input during the evaluation of currently recorded radar data in the event of a repeat traverse of at least one section of a route in respect of which reference data have been stored.

17. Radar sensor according to claim 16, **characterised in that** the control device (5) is configured to perform a method according to one of claims 1 to 15.

18. Motor vehicle (6), having at least one radar sensor (3) according to claim 16 or 17.

## Revendications

1. Procédé de fonctionnement d'un capteur radar (3) utilisé pour l'observation de l'environnement pour un véhicule automobile (6), dans lequel des données de référence décrivant des caractéristiques statiques observables par le capteur radar (3) sur au moins un tracé effectué par le véhicule automobile (6) sont détectées en tenant compte de données radar recueillies le long du tracé et mémorisées dans le capteur radar (3),
**caractérisé en ce que** :
lors d'un nouveau parcours d'au moins une section d'un tracé, dont des données de référence sont mémorisées, l'évaluation de données radar couramment recueillies est réalisée en tenant compte des données de référence à moindres frais.

2. Procédé selon la revendication 1,
**caractérisé en ce que** :
pour réduire les frais, des caractéristiques tirées des données de référence sont identifiées dans les données radar courantes et les données radar courantes concernant la caractéristique identifiée ne sont pas encore évaluées et/ou le sont simplement et/ou au moins une partie de l'évaluation est réduite à des caractéristiques subsistant après une différenciation des données de référence et des données radar.

3. Procédé selon la revendication 1 ou la revendication 2,
**caractérisé en ce que** :
les données de référence sont mémorisées sur un tracé, même si celui-ci a été parcouru plus fréquemment qu'un nombre prédéterminé de fois.

4. Procédé selon l'une quelconque des revendications précédentes,
**caractérisé en ce que** :
les données de référence sont détectées par évaluation statistique parmi des données radar recueillies pendant plusieurs trajets le long du tracé et/ou actualisées statistiquement à chaque nouveau parcours le long du tracé.

5. Procédé selon l'une quelconque des revendications précédentes,
**caractérisé en ce que** :
les données de référence sont mémorisées comme décrivant simplement les caractéristiques en comparaison des données radar.

6. Procédé selon la revendication 5,
**caractérisé en ce que** :
les données de référence pour chaque caractéristique sont mémorisées comme comprenant une indication de position vis-à-vis de la caractéristique et/ou au moins une extension de la caractéristique et/ou au moins une propriété de réflexion de la caractéristique et/ou sont mémorisées sous la forme d'une carte environnementale.

7. Procédé selon l'une quelconque des revendications précédentes,
**caractérisé en ce que** :
on détecte comme caractéristique dans les données de référence des objets de construction, en particulier des bâtiments et/ou des pierres de bordure et/ou des rails de sécurité et/ou des ponts, et/ou des caractéristiques rapportées au parcours routier, en particulier des courbes et/ou des croisements et/ou des jonctions de routes.

8. Procédé selon l'une quelconque des revendications précédentes,
**caractérisé en ce que** :
l'on mémorise dans les données de référence une trajectoire en particulier spécifique au conducteur le long du tracé et/ou une information de qualité décrivant la qualité de la détection de données, en particulier le bruit.

9. Procédé selon l'une quelconque des revendications précédentes,
**caractérisé en ce que** :
les données de référence sont utilisées lors du suivi ultérieur d'objets (2) détectés dans les données radar courantes, en particulier à des fins de test de vraisemblance d'une hypothèse et/ou pour améliorer l'évaluation d'un bruit de fond et/ou en fonction d'un parcours connu pour des objets statiques (2).

10. Procédé selon l'une quelconque des revendications précédentes,
**caractérisé en ce que** :
en fonction des données de référence, une zone de pertinence est définie pour l'évaluation des données radar, en particulier en raison d'une exclusion de zones environnementales non praticables et/ou praticables spatialement séparées dont la position est tirée des données de référence.

11. Procédé selon l'une quelconque des revendications précédentes,
**caractérisé en ce que** :
les données de référence sont mises à disposition, au moins par rapport à une section de tracé courante parcourue conjointement, par communication d'un véhicule automobile à une autre, d'au moins un autre véhicule automobile présentant également un capteur radar.

12. Procédé selon l'une quelconque des revendications précédentes,
**caractérisé en ce que** :
lors d'un échange du capteur radar (3), une copie des données de référence mémorisée dans un autre composant du véhicule automobile (6) est transférée dans le capteur radar nouvellement incorporé (3) et/ou le capteur radar nouvellement incorporé (3) est initié par les données de référence d'autres capteurs radar (3) du véhicule automobile (6) présentant une zone de détection se chevauchant dans l'espace et/ou le temps.

13. Procédé selon l'une quelconque des revendications précédentes,
**caractérisé en ce que** :
la détection et/ou l'actualisation des données de référence se fait ou se font également en tenant compte des données radar et/ou des données de référence d'autres capteurs radar (3) du véhicule automobile (6) présentant une zone de contrôle se chevauchant dans l'espace et/ou le temps avec le capteur radar (3).

14. Procédé selon la revendication 13,
**caractérisé en ce que** :
les données radar et/ou les données de référence de différents capteurs radar (3) du véhicule automobile (6) sont regroupées par analyse statistique.

15. Procédé selon l'une quelconque des revendications précédentes,
**caractérisé en ce que** :
les données de référence et/ou les données de tracé décrivant les tracés sont prises en compte dans au moins un système d'assistance au conducteur du véhicule automobile (6), en particulier pour détecter un style de conduite et/ou pour identifier les tracés inconnus du conducteur.

16. Capteur radar (3) pour l'observation environnementale dans un véhicule automobile (6), présentant un dispositif de mémoire (4) pour mémoriser au moins des données de référence en rapport avec le tracé parcouru par le véhicule automobile (6) et décrivant des caractéristiques statiques observables par le capteur radar (3) et **caractérisé par** un dispositif de commande (5) conçu pour tenir compte des données de référence afin de réduire les frais lors de l'évaluation de données radar couramment recueillies lors d'un nouveau parcours au moins d'une section d'un tracé dont les données de référence sont mémorisées.

17. Capteur radar selon la revendication 16,
**caractérisé en ce que** :
le dispositif de commande (5) est conçu pour réaliser un procédé selon l'une quelconque des revendications 1 à 15.

18. Véhicule automobile (6) présentant au moins un capteur radar (3) selon la revendication 16 ou 17.
